Europäisches Patentamt

**European Patent Office**

Office européen des brevets

(11) Numéro de publication: **0 070 214**
A1

# (12) DEMANDE DE BREVET EUROPEEN

(21) Numéro de dépôt: 82401149.8

(22) Date de dépôt: 23.06.82

(51) Int. Cl.³: **C 08 L 23/08**
**C 08 J 5/18**

(30) Priorité: 15.07.81 FR 8113758

(43) Date de publication de la demande:
19.01.83 Bulletin 83/3

(84) Etats contractants désignés:
AT BE CH DE FR GB IT LI LU NL SE

(71) Demandeur: SOCIETE CHIMIQUE DES
CHARBONNAGES SA
Tour Aurore Cédex 5
F-92080 Paris la Défense 2(FR)

(72) Inventeur: Haas, Armand
7 Parc Mercier
F-62670 Mazingarbe(FR)

(74) Mandataire: Dubost, Thierry
Société Chimique des Charbonnages S.A. Service
Propriété Industrielle B.P. No 49
F-62160 Bully Les Mines(FR)

(54) Compositions à base de copolymère d'éthylène pour la fabrication de film auto-adhésif étirable à froid.

(57) Composition à base d'un polymère d'éthylène de masse volumique comprise entre 0,905 et 0,940 g/cm3 et d'indice de fluidité compris entre 0,1 et 2 dg/mn.
Elle comprend:
(a) de 88 à 97 % en poids d'un copolymère éthylène/α-oléfine, ladite α-oléfine ayant de 3 à 10 atomes de carbone, et
(b) de 3 à 12 % en poids d'un polymère choisi parmi le polyisobutylène, le polypropylène atactique, le polybutadiène-cis et le caoutchouc bromobutyle.
Application à la fabrication de films auto-adhésifs étirables à froid.

EP 0 070 214 A1

La présente invention se rapporte à des compositions pour film auto-adhésif étirable à froid et aux films fabriqués à partir desdites compositions.

La littérature donne de nombreux exemples de compositions à base de polymères d'éthylène pour la fabrication de films de matière plastique auto-adhésifs. Dans un premier temps ces compositions comportaient le plus souvent un polyéthylène de basse densité (obtenu par un procédé de polymérisation par voie radicalaire) et des quantités variables d'un copolymère éthylène-propylène de type élastomère ayant une viscosité Mooney comprise entre 15 et 80. Des exemples de telles compositions sont décrits dans les brevets français n° 2.368.416 et 2.405.972, le brevet britannique 2.038.845, les brevets américains n° 4.110.414 et 4.123.417. Puis d'autres documents ont décrit la nécessité d'un traitement supplémentaire par une décharge Corona, tel que le brevet français n° 2.392.064, ou bien la possibilité de substituer un copolymère éthylène/butène-1 linéaire au polyéthylène basse densité, tel que le brevet européen n° 0 014 539. Enfin le brevet européen n° 0 011 930 a décrit la possibilité de substituer un polyisobutylène au copolymère éthylène-propylène de type élastomère et de l'associer au polyéthylène basse densité ou à un copolymère éthylène/acétate de vinyle.

Par ailleurs, le brevet français n° 2.277.852 (EXXON) décrit une composition pour la fabrication d'une feuille auto-collante, caractérisée par le fait qu'elle comprend :

a) de 85 à 99,8 % en poids d'une polyoléfine thermoplastique,

b) de 0,1 à 10,0 % en poids d'un ester partiel d'un acide carboxylique et d'un polyol et

c) soit de 0,1 à 10 % en poids d'une résine hydrocarbonée hydrogénée, soit de 0,1 à 10 % en poids de polybutène ou de polyisobutène, à condition que les poids combinés de (b) et (c) ne soient pas supérieurs à 15 % en poids. Il est précisé page 5 lignes 32-34 que la quantité préférée du constituant (c) est inférieure ou égale à 3 % en poids.

Par ailleurs il est connu que les films fabriqués à partir de polyéthylène de basse densité (obtenu par un procédé de polymérisation par voie radicalaire) présentent des caractéristiques de facilité d'étirage, de force de cohésion et de propriétés mécaniques insuffisantes pour connaître un développement important dans la technique dite du film étirable à froid. On rappelle à ce sujet que l'étirable à froid est une technique d'emballage consistant à maintenir groupés plusieurs fardeaux de nature identique ou différente mais de forme géométrique relativement régulière par étirement d'un film, à température ambiante, autour de ces fardeaux. Le film peut être étiré soit selon la technique dite de la machine à rideau, soit selon la technique de banderolage.

Selon la technique dite de la machine à rideau, la largeur du film disposé verticalement correspond à la hauteur de la charge. Les extrémités du film, étiré soit directement soit indirectement, sont soudées sur toute cette largeur. La soudure est effectuée sous tension afin de maintenir l'étirement.

La technique du banderolage se subdivise en deux variantes, le banderolage droit et le banderolage hélicoïdal. Selon la technique de banderolage droit, la largeur du film correspond en général à la hauteur de la charge, le film dévidé étant étiré entre un cylindre freineur et la charge elle-même. Selon la technique de banderolage hélicoïdal, la largeur du film est inférieure à la hauteur de la charge, charge qui par rotation étire le film comme dans le cas précédent. Pour couvrir toute la hauteur de la charge, le film est animé d'un mouvement de bas en haut et décrit donc une spirale. L'étirement, qui se fait entre un cylindre freineur et la charge ou bien entre la bobine de film elle-même freinée et la charge, est fonction de la vitesse de rotation de la charge et/ou du degré de liberté imposé au cylindre freineur ou à la bobine. Dans cette dernière technique, de loin la plus répandue actuellement, l'automatisation complète implique que la pose des extrémités du film soit réalisée. Ce problème est l'un de ceux auxquels la présente invention apporte une solution.

Jusqu'à présent, comme on l'a vu d'après les différents brevets cités ci-dessus, les matières plastiques les plus fréquemment utilisées dans la technique du film étirable à froid ont été le polyéthylène de basse densité (obtenu par un procédé de polymérisation par voie radicalaire) et les copolymères éthylène-acétate de vinyle. Ces polymères, auxquels l'addition d'un copolymère éthylène-propylène de type élastomère apporte des propriétés d'auto-adhérence, présentent des caractéristiques qui freinent les possibilités de développement de la technique de film étirable à froid. Ainsi, compte tenu des vitesses d'étirement (de l'ordre de 40 m/mn entre bobine et charge) habituellement pratiquées dans cette technique, il est indispensable de limiter à 30 % environ le taux d'étirement de ces polymères pour ne pas risquer de développer une force d'étirement proche de la résistance à la rupture du polymère et, donc, pour ne pas engendrer des ruptures continuelles de fabrication. D'autre part les propriétés mécaniques de films étirés à froid selon l'art antérieur restent modestes : allongement à la rupture de l'ordre de 500 %, résistance à la rupture de l'ordre de 200 kg/cm2, résistance au déchirement de l'ordre de 250 g pour un film d'épaisseur 50 $\mu$m.

Le but de la présente invention consiste donc à proposer un film polymère présentant :

- d'une part toutes les caractéristiques requises dans la technique d'étirable à froid, c'est-à-dire les meilleures propriétés mécaniques possibles et la meilleure capacité à s'étirer le plus possible sous l'action d'une force la plus faible possible à des vitesses pouvant atteindre 40 m/mn.
- d'autre part une facilité de pose de ses extrémités dans la technique du banderolage hélicoïdal, en vue d'en permettre l'automatisation complète. Cette dernière condition est réalisée selon l'invention par l'utilisation d'un film auto-adhésif.

Le film étirable à froid et auto-adhésif, objet de la présente invention, est réalisé à partir d'une composition comprenant :

(a) de 88 à 97 % en poids d'un copolymère éthylène/$\alpha$-oléfine, ladite $\alpha$-oléfine ayant de 3 à 10 atomes de carbone, de masse volumique comprise entre 0,905 et 0,940 g/cm3 et d'indice de fluidité compris entre 0,1 et 2 dg/mn, et

(b) de 3 à 12 % en poids d'un polymère choisi parmi le polyisobutylène, le polypropylène atactique, le polybutadiène-cis et le caoutchouc bromobutyle.

Les copolymères éthylène/$\alpha$-oléfine utilisables dans le cadre de la présente invention sont fabriqués par des procédés de polymérisation de type Ziegler soit à basse pression en solution dans un hydrocarbure inerte soit à pression élevée et température élevée dans un réacteur homogène. De tels polymères ont déjà été décrits notamment dans les brevets français n° 1.172.726, 1.604.980 et 2.451.924. Toutefois des copolymères préférés pour la mise en oeuvre de la présente invention sont des copolymères d'éthylène et d'$\alpha$-oléfines comprenant au moins 4 atomes de carbone, de masse volumique comprise entre 0,905 et 0,940 g/cm3 et d'indice de fluidité compris entre 0,2 et 2 dg/mn, ayant une teneur moyenne en motifs $\alpha$-oléfines comprise entre 1 et 8 % en moles et caractérisés en ce que la distribution des motifs $\alpha$-oléfines dans le copolymère est hétérogène, ledit copolymère comprenant des fractions cristallines et des fractions amorphes, et en ce que la teneur en motifs $\alpha$-oléfines dans le copolymère varie entre au moins 0,2 et au plus 5 fois leur teneur moyenne selon les fractions considérées. De tels copolymères sont décrits dans la demande de brevet français n° 81/13.598. Leur procédé de fabrication consiste à copolymériser l'éthylène et les $\alpha$-oléfines ayant au moins 4 atomes de carbone dans au moins un réacteur comportant au moins une zone, à une température comprise entre 180° et 320°C et sous une pression comprise entre 300 et 2500 bars, au moyen d'un système catalytique de type Ziegler comprenant d'une part un activateur choisi parmi les hydrures et les composés organométalliques des métaux des groupes I à III de la Classification Périodique et d'autre part au moins un composé halogéné de métal de transition, caractérisé en ce que d'une part le flux gazeux alimentant le réacteur est constitué en régime stationnaire de 10 à 80 % en poids d'éthylène et de 20 à 90 % en poids d'$\alpha$-oléfines et d'autre part le système catalytique présente une réactivité vis-à-vis de l'éthylène très supérieure, de préférence de 5 à 15 fois supérieure, à sa réactivité vis-à-vis des $\alpha$-oléfines.

Un exemple non limitatif de tels composés a pour formule :

$$(TiCl_3, \tfrac{1}{3} AlCl_3) (MX_3)_x (MgCl_2)_y$$

dans laquelle $0,3 \leqslant x \leqslant 3$, $0 \leqslant y \leqslant 20$, M est un métal de transition choisi dans les groupes VB, VIB et VIII de la Classification Périodique et X est un halogène.

La nature du constituant (b) des compositions selon l'invention a une grande importance et a été choisie, en fonction de la nature du constituant (a), en vue d'une efficacité maximale pour résoudre les problèmes évoqués ci-dessus. Ainsi les constituants (b) proposés dans le cadre de la présente invention sont-ils préférés d'une part aux copolymères éthylène-propylène de type élastomère utilisés dans l'art antérieur, d'autre part aux résines de pétrole aromatiques.

La proportion du constituant (b) dans les compositions selon l'invention est également choisie, en fonction de la nature du constituant (a), en vue d'une efficacité optimale. Cette proportion pondérale est de préférence comprise entre 3 et 10 % lorsque le constituant (b) est le polyisobutylène, entre 5 et 12 % lorsque le constituant (b) est le polypropylène atactique.

Des films étirables à froid et auto-adhésifs peuvent être obtenus à partir des compositions selon l'invention par extrusion-soufflage à travers une filière cylindrique et à une température généralement comprise entre 200° et 280°C, avec un taux de gonflage compris entre 1,5 et 4. Ils peuvent aussi être obtenus par extrusion à travers une filière plate, la face la plus adhésive du film étant celle en contact avec le rouleau refroidisseur. Ces films ont une épaisseur comprise entre 10 et 150 µm environ et présentent la caractéristique remarquable de pouvoir s'étirer à froid avec une vitesse de l'ordre de 40 m/mn et un taux d'étirement de l'ordre de 100 %, c'est-à-dire plus de 3 fois supérieur au taux habituellement utilisé pour les compositions auto-adhésives à base de polyéthylène de basse densité.

Il faut noter que cette caractéristique remarquable des films selon l'invention est maintenue même lorsqu'on substitue jusqu'à 15 % en poids de polyéthylène basse densité (obtenu par voie radicalaire) au copolymère éthylène $\alpha$-oléfine formant le constituant (a) des compositions précédemment décrites. Les compositions ternaires ainsi obtenues font donc aussi partie de la présente invention.

Les compositions selon l'invention peuvent être obtenues selon les méthodes conventionnelles telles que l'emploi d'un mélangeur de type Banbury, d'un mélangeur continu intensif ou d'une extrudeuse de mélange. Elles peuvent aussi être obtenues par incorporation du constituant (b) directement dans le réacteur de fabrication du constituant (a), pendant la réaction de copolymérisation ou bien à la sortie de ce réacteur.

Les films selon l'invention présentent la particularité avantageuse d'avoir une résistance au déchirement transversal, de l'ordre de 700 à 800 g pour un film de 50 $\mu$m d'épaisseur, qui est à la fois très supérieure à celle des films auto-adhésifs selon l'art antérieur et aussi supérieure à celle d'un film de même épaisseur fabriqué à partir du constituant (a) seul.

Les exemples suivants sont donnés à titre illustratif et non limitatif.

### EXEMPLE 1 - Fabrication d'un copolymère éthylène/butène-1 hétérogène

On copolymérise l'éthylène et le butène-1 dans un réacteur autoclave de forme cylindrique fonctionnant sous une pression de 900 bars et muni intérieurement d'un agitateur et d'écrans métalliques qui délimitent trois zones. La zone 1, maintenue à une température de 210°C, a un volume double de celui de chacune des deux zones suivantes, est alimentée par un flux de 200 kg/h d'un mélange comprenant 36 % en poids de butène-1 et 64 % en poids d'éthylène et reçoit un système catalytique comprenant d'une part du diméthyléthyldiéthylsiloxalane et d'autre part un composé de formule $TiCl_3, \frac{1}{3} AlCl_3, VCl_3$, en quantité respectivement telle que le rapport atomique Al/Ti soit égal à 3. La zone 2, maintenue à la température de 240°C, est alimentée par un flux de 55 kg/h du même mélange que précédemment et reçoit le même système catalytique. Enfin la zone 3, à la sortie de laquelle le mélange réactionnel contenant le copolymère est évacué vers un dispositif de séparation et de recyclage, est maintenue à la température de 280°C et ne reçoit ni monomère ni catalyseur. Le temps de séjour moyen du système catalytique dans le réacteur est de 43 secondes.

On obtient ainsi, avec un rendement catalytique de 6,2 kilogrammes de copolymère par milliatome de métal de transition (titane et vanadium), un copolymère d'indice de fluidité (mesuré selon la norme ASTM D 1238-73) égal à 0,8 dg/mn, de masse volumique (mesurée selon la norme NF T 51-063) égale à 0,919 g/cm3, de masse moléculaire moyenne en nombre (mesurée par chromatographie de perméation de gel) égale à 43.000, d'indice de polydispersité Mw/Mn égal à 3,6, ayant une teneur molaire moyenne en motifs butène-1 égale à 3,2 %, un point de fusion de la fraction cristalline (déterminé par analyse enthalpique différentielle) égal à 122°C et dont l'hétérogénéité de la distribution du butène-1 (déterminée par un test de fractionnement du copolymère) s'exprime par le multiple (2,2 fois) et le sous-multiple (0,5 fois) de la teneur moyenne entre lesquels varie la teneur en motifs butène-1 selon les fractions considérées.

EXEMPLES 2 à 7

Un mélange du copolymère décrit à l'exemple 1 et d'un constituant (b), dont la nature et la quantité (exprimée en pour cent pondéral par rapport au mélange) sont précisées dans le tableau I, est extrudé à travers une filière annulaire, à une température de 240°C, et transformé en film tubulaire ayant une épaisseur de 30 μm. Sur ce film on mesure les propriétés suivantes :

- force d'adhésion F, déterminée selon la norme ASTM D 3354-74 et exprimée en grammes. Cette force est mesurée selon la méthode suivante : On prélève des échantillons en forme de bandes de 7,5 cm de largeur et 10,5 cm de longueur. Les échantillons sont soumis, deux par deux et face contre face, à une pression de 80 g/cm2 pendant 3 heures. Au moyen d'un appareil à plateaux parallèles de type Davenport, on mesure alors la force F à appliquer pour décoller les deux échantillons.

- résistance au déchirement dans le sens transversal RDT, déterminée selon la norme ASTM D 1922-67 et exprimée en grammes.

Les résultats de ces mesures sont indiqués dans le tableau ci-après.

Dans l'exemple 2 (comparatif), aucun constituant (b) n'est mélangé au copolymère de base. Dans les exemples 3 à 5, le constituant (b) est un polyisobutylène noté PIB. Dans les exemples 6 et 7, le constituant (b) est un polypropylène atactique, noté PPA, de masse volumique 0,900 g/cm3, de poids moléculaire (moyenne en nombre) 2000, d'indice de fluidité supérieur à 200 dg/mn et présentant une absence totale de cristallinité selon l'analyse enthalpique différentielle. De plus dans les exemples 5 et 7, on a substitué 10 % en poids de polyéthylène de densité 0,922 g/cm3 (obtenu par voie radicalaire) au copolymère éthylène/butène-1, de façon à obtenir des compositions ternaires.

Les films obtenus peuvent être étirés à froid avec un taux d'étirement de 100 % et présentent de très bonnes propriétés mécaniques : allongement à la rupture compris entre 600 et 900 %, résistance à la rupture comprise entre 200 et 300 kg/cm2.

TABLEAU

| Exemples | | 2 | 3 | 4 | 5 | 6 | 7 |
|---|---|---|---|---|---|---|---|
| (b) { nature | | - | PIB | PIB | PIB | PPA | PPA |
| { quantité (%) | | 0 | 5 | 7,5 | 10 | 5 | 10 |
| F | | 5 | 67 | 83 | 100 | 65 | 97 |
| RDT | | 410 | 440 | 450 | 470 | 440 | 465 |

REVENDICATIONS

1. Composition à base d'un polymère d'éthylène de masse volumique comprise entre 0,905 et 0,940 g/cm3 et d'indice de fluidité compris entre 0,1 et 2 dg/mn, caractérisée en ce qu'elle comprend :

(a) de 88 à 97 % en poids d'un copolymère éthylène/α-oléfine, ladite α-oléfine ayant de 3 à 10 atomes de carbone, et

(b) de 3 à 12 % en poids d'un polymère choisi parmi le polyisobutylène, le polypropylène atactique, le polybutadiène-cis et le caoutchouc bromobutyle.

2. Composition selon la revendication 1, caractérisée en ce que le copolymère (a) est un copolymère d'éthylène et d'α-oléfines comprenant au moins 4 atomes de carbone, de masse volumique comprise entre 0,905 et 0,940 g/cm3 et d'indice de fluidité compris entre 0,2 et 2 dg/mn, ayant une teneur moyenne en motifs α-oléfines comprise entre 1 et 8 % en moles et caractérisés en ce que la distribution des motifs α-oléfines dans le copolymère est hétérogène, ledit copolymère comprenant des fractions cristallines et des fractions amorphes, et en ce que la teneur en motifs α-oléfines dans le copolymère varie entre au moins 0,2 et au plus 5 fois leur teneur moyenne selon les fractions considérées.

3. Composition selon l'une des revendications 1 et 2, caractérisée en ce qu'elle comprend, comme constituant (b), de 3 à 10 % de polyisobutylène.

4. Composition selon l'une des revendications 1 et 2, caractérisée en ce qu'elle comprend, comme constituant (b), de 5 à 12 % de polypropylène atactique.

5. Composition selon la revendication 1, caractérisée en ce que jusqu'à 15 % en poids de polyéthylène de basse densité obtenu par voie radicalaire est substitué au constituant (a) de ladite composition.

6. Film auto-adhésif étirable à froid, caractérisé en ce qu'il est obtenu par extrusion-soufflage, ou par extrusion à travers une filière plate, d'une composition selon l'une des revendications 1 à 5.

7. Film selon la revendication 6, caractérisé en ce qu'il est obtenu par extrusion-soufflage à une température comprise entre 200° et 280°C.

8. Film selon l'une des revendications 6 et 7, caractérisé en ce qu'il est obtenu par extrusion-soufflage avec un taux de gonflage compris entre 1,5 et 4.

9. Film selon l'une des revendications 6 à 8, caractérisé en ce que son épaisseur est comprise entre 10 et 150 μm.

**Office européen des brevets**

## RAPPORT DE RECHERCHE EUROPEENNE

EP 82 40 1149

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | C 08 L 23/08 |
| D,X | FR-A-2 277 852 (EXXON) *Revendications 1-3,13,14; page 1, ligne 36 - page 2, ligne 23; page 5, lignes 18-34* | 1-9 | C 08 J 5/18 |
| | --- | | |
| A | FR-A-1 277 594 (STAMICARBON) *Résumé* | 1 | |
| | --- | | |
| A | FR-A-1 342 926 (KALLE) *Résumé* | | |
| | ----- | | |

**DOMAINES TECHNIQUES RECHERCHES (Int. Cl. ³)**

C 08 J
C 08 L

Le présent rapport de recherche a été établi pour toutes les revendications

| Lieu de la recherche | Date d'achèvement de la recherche | Examinateur |
|---|---|---|
| LA HAYE | 27-10-1982 | GOOVAERTS R.E. |